# EUROPÄISCHE PATENTANMELDUNG

(11) **EP 4 706 933 A2**
(43) Veröffentlichungstag der Anmeldung: **11.03.2026**
(21) Anmeldenummer: 25223945.4
(22) Anmeldetag: 05.11.2019
(51) Int. Cl.: B29C 48/08

(54) **STELLVORRICHTUNG UND VERFAHREN FÜR EINE KONTROLLE EINER AUSTRITTSDICKE EINES DÜSENAUSTRITTSSPALTES EINER FLACHFOLIENMASCHINE**

(30) Priorität: 06.11.2018 DE 102018127670
(62) Teilanmeldung aus: 19798293.7
(71) Anmelder: Windmöller & Hölscher KG, 49525 Lengerich (DE)
(72) Erfinder: SCHMITZ, Torsten, 49525 Lengerich (DE); COLELL, Waldemar, 49525 Lengerich (DE); GROEPPER, Bernd-Alexander, 49525 Lengerich (DE)
(74) Vertreter: Bals & Vogel Patentanwälte PartGmbB

(57) **Zusammenfassung**

Die Erfindung betrifft eine Stellvorrichtung (10) für eine Kontrolle einer Austrittsdicke (AD) eines Düsenaustrittsspaltes (110) einer Flachfolienmaschine (100), aufweisend eine Vielzahl von Stellbolzen (20) für die Durchführung einer Stellbewegung zur Änderung der Austrittsdicke (AD), wobei die Stellbolzen (20) einen Stellbereich (SB) aufweisen zwischen einer Schließ-Endposition (SE) und einer Öffnungs-Endposition (OE), wobei weiter der Stellbereich (SB) ausgehend von der Öffnungs-Endposition (OE) einen Basishubweg (BH) für einen Basiseinstellung der Austrittsdicke (AD) und ausgehend von der Schließ-Endposition (SE) einen Prozesshubweg (PH) für einen Prozesskontrolle der Austrittsdicke (AD) aufweist.

## Beschreibung

Die vorliegende Erfindung betrifft eine Stellvorrichtung für eine Kontrolle einer Austrittsdicke eines Düsenaustrittsspaltes einer Flachfolienmaschine sowie ein Verfahren für die Kontrolle eines solchen Düsenaustrittsspaltes.

Es ist bekannt, dass Flachfolienmaschinen eingesetzt werden, um flache Folienprodukte zur Verfügung zu stellen und herzustellen. Hierfür sind diese Flachfolienmaschinen mit Düsenaustrittsspalten bzw. einem Düsenaustrittsspalt versehen, über welchen eine Schmelze in einer breiten, flachen Form als Folienbahn ausgegeben werden kann. Nachfolgend zu dem Düsenaustrittsspalt wird die Folienbahn auf einer Kühlwalze aufgebracht und von dieser gekühlt. Über weitere Walzen in der Flachfolienmaschine kann ein Aufwickeln der auf diese Weise produzierten Flachfolie erfolgen. Zusätzlich ist es auch möglich die Schmelze zu beschichten oder zu kaschieren. So kann beispielsweise hierfür eine oder mehrere Flachbahnen der Schmelze zugeführt werden.

Nachteilhaft bei den bekannten Lösungen für Flachfolienmaschinen ist es, dass beim Umstellen zwischen einem Einsatzprodukt und einem Folgeprodukt zumindest teilweise manuelle Einstellschritte durchgeführt werden müssen. Das Gleiche gilt auch bei der Inbetriebnahme der Flachfolienmaschine im ersten Einsatz bzw. nach Stoppphasen oder Reinigungsphasen. Die manuelle Einstellung erfolgt bei den bekannten Lösungen dahingehend, dass der Düsenaustrittsspalt auf einen Startwert manuell eingestellt wird. Die bekannten Lösungen sehen hierfür Schraubelemente auf der Oberseite von Stellbolzen vor, welche vom Bedienpersonal der Flachfolienmaschine einzeln und vor allem sequenziell nacheinander in die gewünschte Ausgangsposition eingestellt werden. Dabei kann die Maschine sich im ersten Schritt noch in Ruhe befinden, also außerhalb des Produktionsstatus. Hier ist bereits gut zu erkennen, dass die sequenzielle Einstellung einer Vielzahl von Stellbolzen einen sehr großen Zeitraum in Anspruch nimmt. Während dieses Einstellprozesses kann nicht produziert werden, sodass sich die Flachfolienmaschine außerhalb der Produktion befinden muss. Es entsteht also eine Totzeit für die Flachfolienmaschine, in der keine Produktion stattfindet. Ein weiterer Nachteil ist die manuelle Einstellung dahingehend, dass sie nicht oder nur schwer reproduzierbar ist. Vielmehr hängt die Qualität dieser Ersteinstellung bzw. Wiedereinstellung der einzelnen Stellbolzen von der Erfahrung des Bedienpersonals und dessen Feinfühligkeit ab. Zusätzlich wird bei bekannten Lösungen auch eine Einstellung bei laufender Maschine durchgeführt noch bevor die Regelung gestartet wird.

Es ist Aufgabe der vorliegenden Erfindung, die vorstehend beschriebenen Nachteile zumindest teilweise zu beheben. Insbesondere ist es Aufgabe der vorliegenden Erfindung, in kostengünstiger und einfacher Weise eine Reproduzierbarkeit bei der Einstellung und gleichzeitig einen Zeitgewinn bei dieser Einstellung zu erzielen.

Die voranstehende Aufgabe wird gelöst durch eine Stellvorrichtung mit den Merkmalen des Anspruchs 1 und ein Verfahren mit den Merkmalen des Anspruchs 6. Weitere Merkmale und Details der Erfindung ergeben sich aus den Unteransprüchen, der Beschreibung und den Zeichnungen. Dabei gelten Merkmale und Details, die im Zusammenhang mit der erfindungsgemäßen Stellvorrichtung beschrieben sind, selbstverständlich auch im Zusammenhang mit dem erfindungsgemäßen Verfahren und jeweils umgekehrt, sodass bezüglich der Offenbarung zu den einzelnen Erfindungsaspekten stets wechselseitig Bezug genommen wird bzw. werden kann.

Erfindungsgemäß ist eine Stellvorrichtung für eine Kontrolle einer Austrittsdicke eines Düsenaustrittsspaltes einer Flachfolienmaschine ausgestattet. Hierfür weist die Stellvorrichtung eine Vielzahl von Stellbolzen für die Durchführung einer Stellbewegung zur Änderung der Austrittsdicke auf. Die Stellbolzen weisen einen Stellbereich zwischen einer Schließ-Endposition und einer Öffnungs-Endposition auf. Weiter ist dieser Stellbereich ausgehend von der Öffnungs-Endposition mit einem Basishubweg für eine Basiseinstellung der Austrittsdicke ausgebildet. Darüber hinaus weist der Stellbereich ausgehend von der Schließ-Endposition einen Prozesshubweg für eine Prozesskontrolle der Austrittsdicke auf. Selbstverständlich kann im Rahmen der vorliegenden Erfindung der Basishubweg auch oder zusätzlich auf die Schließ-Endposition Bezug nehmen.

Erfindungsgemäß ist die Stellvorrichtung nun mit den Stellbolzen so ausgestaltet, dass zwei unterschiedliche Bewegungen von dem gleichen Stellbolzen mit der gleichen Stellvorrichtung durchgeführt werden können. Dies wird insbesondere später mit Bezug auf das Verfahren noch näher erläutert. Bei der ersten Bewegung handelt es sich sozusagen um die Einstellbewegung, welche das bisherige manuelle Einstellen auf einen Startwert für jeden Stellbolzen ersetzt. Die zweite Bewegung ist die Kontrollbewegung bzw. Prozessbewegung, welche in der Lage ist, im laufenden Betrieb die Stabilität der Produktion und/oder die Qualität des erzeugten Produktes einzustellen bzw. zu gewährleisten.

Erfindungsgemäß sind also in der Stellvorrichtung die beiden Schritte des Einstellens sowie der Prozesskontrolle nun mit ein und derselben Stellvorrichtung mit ein und demselben Stellbolzen an der jeweiligen lokalen Stelle möglich. Insbesondere sind alle Stellbolzen von der Stellvorrichtung in dieser Weise einstellbar und auch hinsichtlich der Prozesskontrolle aktivierbar, sodass die Vorteile für den gesamten Düsenaustrittsspalt erzielt werden können.

Findet nun zum Beispiel bei der Umstellung zwischen zwei Produkten bei der Produktion mit der Flachfolienmaschine oder auch bei der Inbetriebnahme oder dem Wiederanfahren nach dem Stopp der Flachfolienmaschine eine entsprechende Einstellung statt, so wird wie folgt vorgegangen. In einem ersten Schritt wird mithilfe der Stellvorrichtung die Vielzahl der Stellbolzen entlang des Basishubwegs im Stellbereich verfahren. Die Bewegung jedes Stellbolzens im Basishubweg erfolgt so lange, bis die gewünschte Basiseinstellung für die Austrittsdicke eingestellt ist. Dies erfolgt insbesondere in automatisierter oder teilautomatisierter Weise. So können beispielsweise entsprechende Antriebe an den Stellbolzen vorgesehen sein. Handelt es sich bei den Stellbolzen um sogenannte Thermobolzen, welche durch die Beaufschlagung mit einer Temperatur hinsichtlich ihrer Längenerstreckung verändert werden können, so kann sowohl die Einstellung als auch die Prozesskontrolle durch thermische Beaufschlagung, also Aufheizen oder Kühlen erfolgen. Auch die Kombination mit mechanischen Einstellmitteln, zum Beispiel sogenannten Schraubrobotern, ist im Sinne der vorliegenden Erfindung am jeweiligen Stellbolzen denkbar.

Unerheblich davon, mit welchem tatsächlichen technischen Mittel die Einstellung entlang des Basishubweges erfolgt, kann jedoch am gleichen Stellbolzen ebenfalls automatisch oder teilautomatisch auch die Prozesskontrolle anschließend entlang des Prozesshubweges erfolgen.

Wie ausgehend von der voranstehenden Erläuterung gut zu erkennen ist, werden entscheidende Vorteile durch die erfindungsgemäße Ausgestaltung möglich. Dabei handelt es sich zum einen um eine zumindest teilweise zeitlich parallele Einstellung entlang des Basishubweges an zwei oder mehr Stellbolzen. Insbesondere können eine Vielzahl oder sogar alle Stellbolzen zeitlich parallel oder zumindest teilweise zeitlich überlappend entlang des Basishubweges eingestellt werden. Während bisher die hohe Anzahl an Stellbolzen sequenziell hintereinander in manueller Weise vom Bedienpersonal verändert und eingestellt werden musste, kann durch die zumindest zeitlich teilweise parallele Einstellung ein großer Zeitgewinn erzielt werden. Auch kann auf diese Weise eine Symmetrische Ausbildung der Schmelzeströmung, insbesondere in Randabschnitten der Folienbahn, erreicht werden. Dadurch, dass diese Einstellung entlang des Basishubweges auch noch automatisiert oder zumindest teilautomatisiert erfolgen kann, kann während dieser Einstellung die Produktion der Flachfolienmaschine bereits laufen und sogar schon Schmelze produziert werden. D. h., dass die Stellbolzen und auch der Düsenaustrittsspalt während der Einstellung sich bereits im Aufheizbetrieb oder sogar bereits im fertig aufgeheizten Betrieb befinden, sodass eine direkte Einstellung für den Betrieb möglich wird. Die Genauigkeit der Einstellung wird auf diese Weise deutlich erhöht. Nicht zuletzt wird durch die automatisierbare oder teilautomatisierbare Einstellmöglichkeit entlang des Basishubwegs auch eine Reproduzierbarkeit dieser Einstellung gegeben. Während bei den bekannten Lösungen die Qualität dieser Ersteinstellung sehr stark von der Erfahrung des Bedienpersonals abhing, ist nunmehr durch automatisierten oder teilautomatisierten Betrieb eine Reproduzierbarkeit möglich. Dabei kann das Stellen entlang des Basishubweges sowohl als Steuerung als auch als Regelung mit einer entsprechenden Messrückkopplung zur Verfügung gestellt sein.

Sobald die Einstellung entlang des Basishubweges beendet worden ist, kann die Prozesskontrolle durchgeführt werden. Die Prozesskontrolle wird mit den Stellbolzen entlang des an den Basishubweg angrenzenden Prozesshubwegs durchgeführt. Dabei kann der jeweilige Stellbolzen im Prozesshubweg frei bewegt werden. Für Sonderfälle, zum Beispiel bei großen Abweichungen oder starken notwendigen Regeleingriffen, kann es auch möglich sein, wenn der Stellbolzen zusätzlich zum Prozesshubweg auch im Basishubweg für die Prozesskontrolle verändert wird. Mit anderen Worten kann auf diese Weise der jeweilige Stellbolzen durch eine Bewegung entlang des Basishubwegs einen vergrößerten Prozesshubweg zur Verfügung stellen.

Es kann Vorteile mit sich bringen, wenn bei einer erfindungsgemäßen Stellvorrichtung der Basishubweg und der Prozesshubweg aneinander angrenzen oder teilweise überlappen. Der Basishubweg geht dabei zwingend von der Öffnungs-Endposition im Stellbereich aus. Insbesondere wird für ein Verfahren, wie es später noch erläutert wird, der Stellbolzen tatsächlich in die Öffnungs-Endposition zurückbewegt, um bereits für das Einstellen selbst eine definierte Ausgangsposition zu haben. Der Prozesshubweg geht wiederum von der entgegengesetzten Endposition, nämlich der Schließ-Endposition aus. Dabei handelt es sich insbesondere um die Position des Stellbolzens, in welcher dieser den Düsenspalt lokal an dieser Stelle vollständig schließt. Im Zwischenbereich zwischen der Schließ-Endposition und der Öffnungs-Endposition ist es möglich, dass der Basishubweg und der Prozesshubweg zueinander noch eine Beabstandung aufweisen. Bevorzugt grenzen jedoch Basishubweg und Prozesshubweg exakt aneinander an bzw. gehen wenigstens teilweise überlappend ineinander über. Dies führt zu einer besonders einfachen Einstellbarkeit, da direkt am Ende des Basishubweges die Prozesskontrolle entlang des Prozesshubweges einsetzbar ist.

Weitere Vorteile können erzielt werden, wenn bei einer erfindungsgemäßen Stellvorrichtung die Summe aus Prozesshubweg und Basishubweg, insbesondere der gesamte Stellbereich der Vielzahl der Stellbolzen im Bereich zwischen ca. 0,9 mm und ca. 2 mm, insbesondere im Bereich zwischen ca. 1 mm und ca. 1,5 mm liegt. Dabei handelt es sich um besonders vorteilhafte Abmessungsbereiche, in welchen ein ausreichend großer Bewegungsspielraum für den Basishubweg und den Prozesshubweg und gleichzeitig auch eine kompakte Geometrie der Stellbolzen erzielbar wird. Insbesondere ist also der gesamte Hubweg aus Prozesshubweg und Basishubweg, welcher den Stellbereich des jeweiligen Stellbolzens darstellt, ≤ 2 mm. Bevorzugt sind alle Stellbolzen identisch oder im Wesentlichen identisch ausgebildet, sodass auch der Prozesshubweg und der Basishubweg bzw. die gesamte Erstreckung des Stellbereichs für alle Stellbolzen identisch oder im Wesentlichen identisch ist.

Ein weiterer Vorteil wird erzielt, wenn bei einer erfindungsgemäßen Stellvorrichtung eine Speichervorrichtung vorgesehen ist für eine Speicherung der für jeden Stellbolzen spezifischen Stellbewegung entlang des Basishubweges. Eine solche Speichervorrichtung erlaubt es zum Beispiel, wie dies später noch erläutert wird, das Ende der jeweiligen Stellbewegung des Basishubwegs spezifisch für jeden Stellbolzen zu speichern. So ist darauf hinzuweisen, dass bei der Einstellung nicht nur eine gemeinsame Einstellung aller Stellbolzen auf einen gleichen oder identischen Ausgangswert möglich ist, sondern auch die Anpassung an ein gewünschtes spezielles und lokal unterschiedliches Austrittsprofil des Düsenaustrittsspaltes. **In** der Speichervorrichtung ist es nun möglich, den spezifischen Ausgangspunkt für die anschließende Prozesskontrolle exakt in der Speichervorrichtung als Ende des Basishubweges bzw. als Ende dieser spezifischen Stellbewegung zu speichern. Damit ist sozusagen zum Beginn der Prozesskontrolle entlang des Prozesshubweges exakt die jeweilige Ausgangsposition für jeden Stellbolzen bekannt. Während bei bekannten Lösungen durch manuelle Verstellung die Prozesskontrolle sozusagen blind durchgeführt werden müsste, kann erfindungsgemäß die Prozesskontrolle als Eingangsgrößen auf definierte und explizit bestimmte sowie gespeicherte Ausgangswerte zurückgreifen.

Ein weiterer Vorteil kann erzielt werden, wenn bei einer erfindungsgemäßen Stellvorrichtung die Vielzahl der Stellbolzen wenigstens abschnittsweise auf unterschiedlichen Seiten des Düsenaustrittsspaltes angeordnet ist. Auf unterschiedlichen Seiten des Düsenaustrittsspaltes kann also insbesondere unterhalb und oberhalb dieses Düsenaustrittsspaltes bedeuten. Somit ist eine beidseitige Beeinflussung von unten und von oben möglich. Bevorzugt sind alle solche Stellbolzen in erfindungsgemäßer Weise Teile der Stellvorrichtung, sodass auch von beiden Seiten des Düsenaustrittsspaltes die Einstellung entlang des Basishubweges und die Prozesskontrolle entlang des Prozesshubweges erfolgen können.

Ebenfalls Gegenstand der vorliegenden Erfindung ist ein Verfahren für die Kontrolle eines Düsenaustrittsspaltes einer Flachfolienmaschine mit einer erfindungsgemäßen Stellvorrichtung, aufweisend die folgenden Schritte:
- Einstellen eines Ausgangsstellwertes für die Austrittsdicke an einer Vielzahl von Stellbolzen durch Bewegung entlang des Basishubweges,
- Kontrolle der Austrittsdicke anhand eines Vorgabewertes durch Bewegung der Vielzahl der Stellbolzen entlang des Prozesshubweges.

Durch die Verwendung einer erfindungsgemäßen Stellvorrichtung bringt ein erfindungsgemäßes Verfahren die gleichen Vorteile mit sich, wie sie ausführlich mit Bezug auf eine erfindungsgemäße Stellvorrichtung erläutert worden sind. Die erste Bewegung entlang des Basishubweges kann dabei auch als Einstellbewegung bezeichnet werden. Die Bewegung jedes Stellbolzens entlang des Prozesshubweges kann auch als Kontrollbewegung oder Prozessbewegung jedes Stellbolzens bezeichnet werden.

Ein erfindungsgemäßes Verfahren lässt sich dahingehend weiterbilden, dass nach der Einstellbewegung der Austrittsdicke entlang des Basishubweges die Endposition dieser Einstellposition als Ausgangsposition für die folgenden Kontrollbewegungen der Stellbolzen gespeichert wird. Selbstverständlich können auch die jeweiligen Endpositionen von Kontrollbewegungen der Stellpositionen gespeichert werden, um über einen längeren Produktionsprozess für jede notwendige Stellbewegung jedes Stellbolzens die definierte Ausgangsposition zu kennen. Erfindungsgemäß kann eine solche Speicherung der jeweiligen Ausgangsposition in eine entsprechende Speichervorrichtung erfolgen, wie sie bereits mit Bezug auf die erfindungsgemäße Stellvorrichtung erläutert wurde. Die Speicherung erfolgt dabei spezifisch für die einzelnen Stellbolzen, sodass das Verfahren auf die jeweilige Stellposition bzw. die jeweils erreichte Relativposition zurückgreifen kann.

Ebenfalls von Vorteil ist es, wenn bei einem erfindungsgemäßen Verfahren die Einstellbewegung und die Kontrollbewegung wenigstens teilweise zeitlich parallel erfolgen. Bevorzugt sind auch mehrere Einstellbewegungen und/oder mehrere Kontrollbewegungen von mehreren Stellbolzen zumindest teilweise zeitlich parallel durchführbar. Die Einstellung geht bei dieser Ausgestaltung sozusagen in die Kontrolle über, sodass noch schneller ein Umstellen bzw. ein Anstellen der Flachfolienmaschine mit einem Übergang in den Produktionsbetrieb möglich ist. Auch ein komplettes Überlappen von Einstellbewegung und Kontrollbewegung in zeitlicher Hinsicht ist im Sinne der vorliegenden Erfindung denkbar.

Weitere Vorteile sind erzielbar, wenn bei einem erfindungsgemäßen Verfahren die Einstellbewegung spielfrei oder zumindest spielarm erfolgt. Darunter ist zu verstehen, dass während des Einstellens zuerst der entsprechende Stellbolzen auf eine Oberseite der Düsenlippe des Düsenaustrittsspaltes aufgesetzt wird. Dies kann zum Beispiel mit einer definierten Aufsetzkraft erfolgen. Die Reduktion des Spiels zwischen dieser Düsenlippe und den einzelnen Stellbolzen erlaubt eine noch genauere Kontrolle, da Leerfahrten vermieden werden können. Vielmehr ist die exakte Position des Stellbolzens und insbesondere durch die Spielfreiheit auch die entsprechende Relativkorrelation der zugehörigen Düsenlippe genau oder im Wesentlichen genau bekannt.

Ein weiterer Vorteil ist erzielbar, wenn bei einem erfindungsgemäßen Verfahren die Einstellbewegung und/oder die Kontrollbewegung wenigstens abschnittsweise lokal bei einer Auswahl benachbarter Stellbolzen erfolgt. Eine lokale Ansteuerung einzelner Stellbolzen ist insbesondere bei der Kontrollbewegung von Vorteil. So kann eine lokale Kontrolle zu einer Verschiebung des entsprechenden Austrittsprofils führen. Auch globale Einstellungen oder Einstellungen über einen sehr großen lokalen Bereich sind jedoch im Sinne der vorliegenden Erfindung denkbar. Insbesondere wird die Einstellbewegung eher global und die Kontrollbewegung eher in lokaler Weise durchgeführt.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen schematisch:
- Figur 1: eine Ausführungsform einer Flachfolienmaschine mit einer erfindungsgemäßen Stellvorrichtung,
- Figur 2: die Ausführungsform der Figur 1 in Detailansicht des Düsenaustrittsspaltes,
- Figur 3: die Ausführungsform der Figur 2 mit einem kleineren Düsenaustrittsspalt,
- Figur 4: die Ausführungsform der Figuren 1 bis 3 vor dem spielfreien Einstellen von Stellbolzen,
- Figur 5: die Ausführungsform der Figur 4 mit spielfrei eingestellten Stellbolzen,
- Figur 6: eine Darstellung eines Stellbolzens mit Stellbereich,
- Figur 7: die Darstellung der Bewegung des Stellbolzens entlang des Basishubweges und
- Figur 8: die Darstellung eines Stellbolzens bei der Bewegung während der Prozesskontrolle.

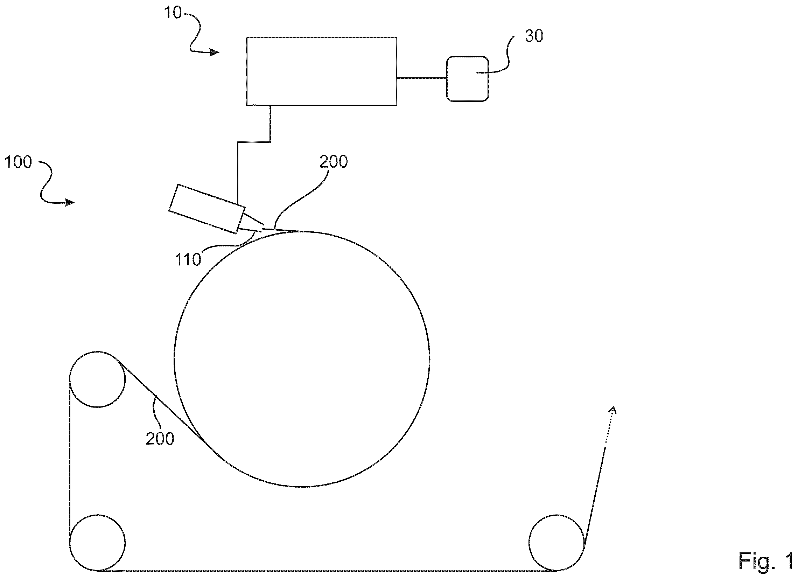

Figur 1 zeigt schematisch eine Flachfolienmaschine 100. Über einen Düsenaustrittsspalt 110 wird Schmelze ausgegeben, welche als Folienbahn 200 auf einer großen Gießwalze bzw. Kühlwalze abkühlt. Die weitere Förderung der abgekühlten Folienbahn 200 ist hier mit einem Pfeil dargestellt, und kann zum Beispiel zu einer Wickelrolle führen. Mithilfe einer Stellvorrichtung 10 ist es möglich, die Austrittsdicke AD der Düsenvorrichtung 110 zu variieren, sodass Einfluss genommen werden kann auf das Dickenprofil der Schmelze bzw. das Dickenprofil der Folienbahn 200. Hier ist auch gut zu erkennen, wie die Stellvorrichtung 10 auf eine entsprechende Speichervorrichtung 30 zurückgreifen kann, in welcher die Speicherung von spezifischen Relativpositionen der einzelnen Stellbolzen 20 erfolgen kann.

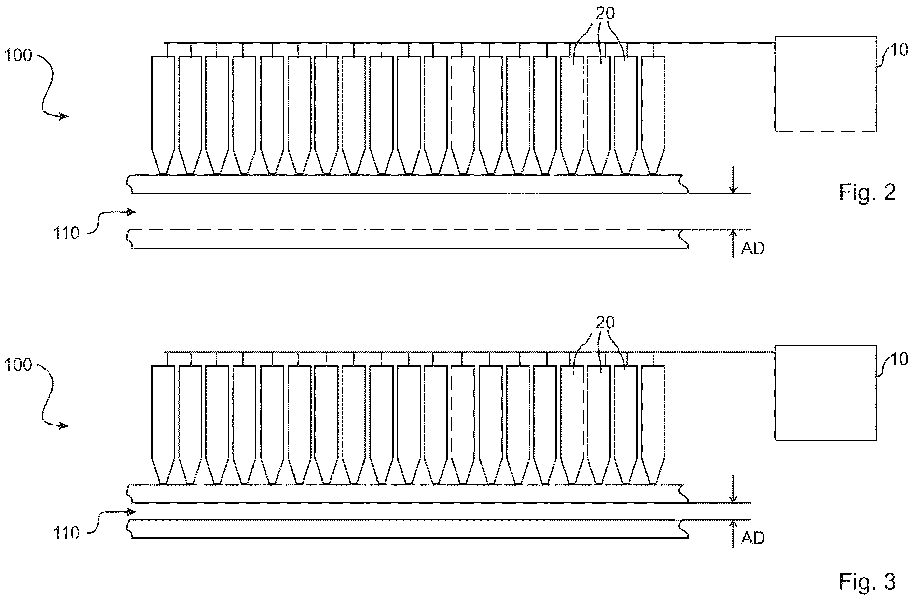

In den Figuren 2 und 3 ist eine Draufsicht auf den Düsenaustrittsspalt 110 der Flachfolienmaschine 100 zu erkennen. Mithilfe der Stellvorrichtung 10 sind nun spezifisch alle einzelnen Stellbolzen 20 ansteuerbar hinsichtlich ihrer Längenerstreckung. Zum Beispiel kann für ein Einstellen einer ersten verringerten Austrittsdicke AD ausgehend von der Figur 2 bei Thermobolzen als Stellbolzen 20 die Temperatur so weit erhöht werden, bis die vergrößerte Erstreckung der einzelnen Stellbolzen 20 bei erhöhter Temperatur den Düsenaustrittsspalt 110 auf die reduzierte Austrittsdicke AD gemäß Figur 3 reduziert hat.

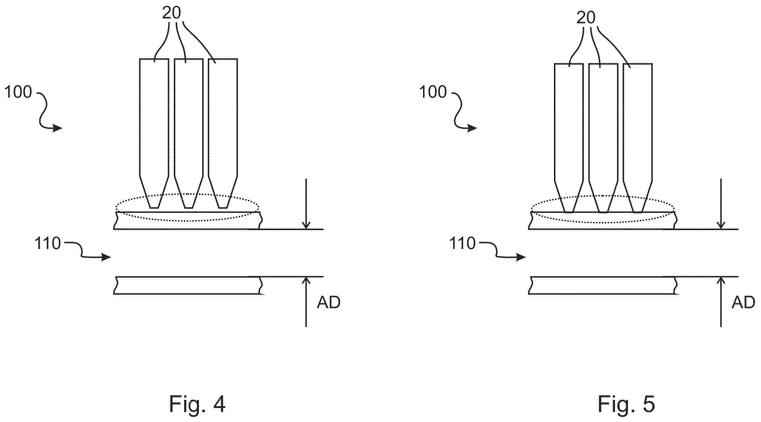

Die Figuren 4 und 5 zeigen die Möglichkeit, ein spielfreies Einstellen zu erzielen. So kann ein Teil der Einstellbewegung darin liegen, die einzelnen Stellbolzen zur Anlage mit der oberen Düsenlippe oberhalb des Düsenaustrittsspaltes 110 zu bringen. Ausgehend von der Figur 4 werden also die Stellbolzen 20 sozusagen von oben an die Düsenlippe des Düsenaustrittsspaltes 110 angelegt, zum Beispiel mit einer definierten Vorspannkraft, wie dies die Figur 5 zeigt.

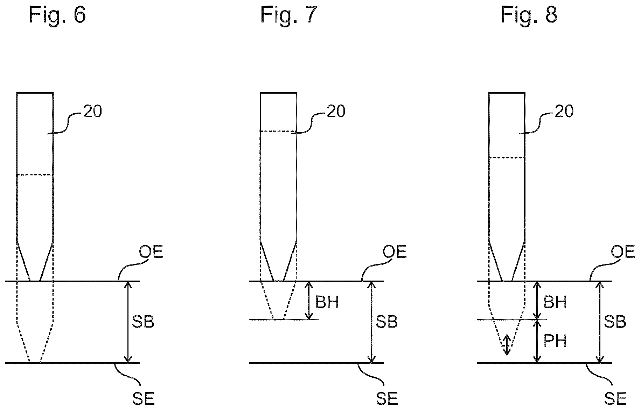

Die Figuren 6, 7 und 8 zeigen schematisch die Möglichkeiten des Basishubweges BH und des Prozesshubweges PH bei der Einstellbewegung und der Kontrollbewegung. Figur 6 zeigt dabei den Stellbolzen 20 in seinen beiden Extrempositionen, nämlich der Öffnungs-Endposition OE und in gestrichelter Darstellung der Schließ-Endposition SE. Damit ist der gesamte Bewegungsbereich als Stellbereich SB vorgegeben, welcher insbesondere kleiner als ca. 2 mm, aber größer als ca. 1 mm ausgestaltet ist. Für die erste Einstellung der Flachfolienmaschine 100 erfolgt gemäß Figur 7 eine Bewegung des Stellbolzens 20 aus der Öffnungs-Endposition OE entlang des Basishubweges BH, wie dies die Figur 7 zeigt. Sobald dieses erste Einstellen erfolgt ist, kann nun die tatsächliche Prozesskontrolle durch ein entsprechendes Öffnen und Schließen innerhalb des Prozesshubweges PH des Stellbolzens 20 gemäß der Figur 8 erfolgen.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 10: Stellvorrichtung
- 20: Stellbolzen
- 30: Speichervorrichtung

- 100: Flachfolienmaschine
- 110: Düsenaustrittsspalt
- 200: Folienbahn

- AD: Austrittsdicke
- SB: Stellbereich
- SE: Schließ-Endposition
- OE: Öffnungs-Endposition
- BH: Basishubweg
- PH: Prozesshubweg

## Patentansprüche

1. Stellvorrichtung (10) für eine Kontrolle einer Austrittsdicke (AD) eines Düsenaustrittsspaltes (110) einer Flachfolienmaschine (100), aufweisend:
eine Vielzahl von Stellbolzen (20) für die Durchführung einer Stellbewegung zur Änderung der Austrittsdicke (AD),
wobei die Stellbolzen (20) einen Stellbereich (SB) aufweisen zwischen einer Schließ-Endposition (SE) und einer Öffnungs-Endposition (OE),
wobei weiter der Stellbereich (SB) ausgehend von der Öffnungs-Endposition (OE) einen Basishubweg (BH) für eine Basiseinstellung der Austrittsdicke (AD) und
ausgehend von der Schließ-Endposition (SE) einen Prozesshubweg (PH) für einen Prozesskontrolle der Austrittsdicke (AD) aufweist,
wobei die Stellbolzen (20) in Form von Thermobolzen für die Prozesskontrolle ausgeführt sind und mit mechanischen Einstellmitteln in Form von Schraubrobotern für die Basiseinstellung kombiniert sind.

2. Stellvorrichtung (10) nach Anspruch 1, **dadurch gekennzeichnet, dass** bei der Umstellung zwischen zwei Produkten bei einer Produktion mit der Flachfolienmaschine (100), bei einer Inbetriebnahme oder dem Wiederanfahren nach dem Stopp der Flachfolienmaschine (100) eine entsprechende Basiseinstellung durchführbar ist,
wobei insbesondere in einem ersten Schritt mithilfe der Stellvorrichtung (10) die Vielzahl der Stellbolzen (20) entlang des Basishubwegs (BH) im Stellbereich (SB) verfahrbar ist,
wobei vorzugsweise die Bewegung jedes Stellbolzens (20) im Basishubweg (BH) so lange durchführbar ist, bis die Basiseinstellung für die Austrittsdicke (AD) eingestellt ist, insbesondere in automatisierter oder teilautomatisierter Weise.

3. Stellvorrichtung (10) nach einem der vorhergehenden Ansprüche, **dadurch gekennzeichnet, dass** die Basiseinstellung der Austrittsdicke (AD) in automatisierter oder teilautomatisierter Weise erfolgt,
und wobei die Prozesskontrolle der Austrittsdicke (AD) automatisch oder teilautomatisch erfolgt.

4. Stellvorrichtung (10) nach einem der vorangegangenen Ansprüche, **dadurch gekennzeichnet, dass** der Basishubweg (BH) und der Prozesshubweg (PH) aneinander angrenzen oder teilweise überlappen.

5. Stellvorrichtung (10) nach einem der vorangegangenen Ansprüche, **dadurch gekennzeichnet, dass** die Summe aus Prozesshubweg (PH) und Basishubweg (BH), insbesondere der gesamte Stellbereich (SB) der Vielzahl der Stellbolzen (20), im Bereich zwischen ca. 0,9 mm und 2 mm, insbesondere im Bereich zwischen 1 mm und 1,5 mm liegt.

6. Stellvorrichtung (10) nach einem der vorangegangenen Ansprüche, **dadurch gekennzeichnet, dass** eine Speichervorrichtung (30) vorgesehen ist für eine Speicherung der für jeden Stellbolzen (20) spezifischen Stellbewegung entlang des Basishubweges (BH).

7. Stellvorrichtung (10) nach einem der vorangegangenen Ansprüche, **dadurch gekennzeichnet, dass** die Vielzahl der Stellbolzen (20) wenigstens abschnittsweise auf unterschiedlichen Seiten des Düsenaustrittsspaltes (110) angeordnet sind.

8. Verfahren für die Kontrolle eines Düsenaustrittsspaltes (110) einer Flachfolienmaschine (100) mit einer Stellvorrichtung (10) mit den Merkmalen eines der Ansprüche 1 bis 5, aufweisend die folgenden Schritte:
- Einstellen eines Ausgangsstellwertes für die Austrittsdicke (AD) an einer Vielzahl von Stellbolzen (20) durch Bewegung entlang des Basishubweges (BH),
- Kontrolle der Austrittsdicke (AD) anhand eines Vorgabewertes durch Bewegung der Vielzahl der Stellbolzen (20) entlang des Prozesshubweges (PH).

9. Verfahren nach Anspruch 8, **dadurch gekennzeichnet, dass** nach der Einstellbewegung der Austrittsdicke (AD) entlang des Basishubweges (BH) die Endposition dieser Einstellbewegung als Ausgangsposition für die folgenden Kontrollbewegungen der Stellbolzen (20) gespeichert wird.

10. Verfahren nach einem der Ansprüche 8 bis 9, **dadurch gekennzeichnet, dass** die Einstellbewegung und die Kontrollbewegung wenigstens teilweise zeitlich parallel erfolgt.

11. Verfahren nach einem der Ansprüche 8 bis 10, **dadurch gekennzeichnet, dass** die Einstellbewegung spielfrei oder zumindest spielarm erfolgt.

12. Verfahren nach einem der Ansprüche 8 bis 11, **dadurch gekennzeichnet, dass** die Einstellbewegung und/oder die Kontrollbewegung wenigstens abschnittsweise lokal bei einer Auswahl benachbarter Stellbolzen (20) erfolgt.
